# EUROPÄISCHE PATENTSCHRIFT

(11) **EP 3 874 177 B1**
(45) Veröffentlichungstag und Bekanntmachung des Hinweises auf die Patenterteilung: **29.11.2023**
(21) Anmeldenummer: 19794875.5
(22) Anmeldetag: 12.10.2019
(51) Int. Cl.: E04H 9/02, F16F 1/38, F16F 1/393, F16F 1/40, F16F 1/48, F16F 7/108

(54) **ELASTISCHE GELENKE MIT TORSIONSANSCHLAG UND IHRE VERWENDUNG IN SCHWINGUNGSTILGERN**
ELASTIC JOINTS HAVING A TORSION STOP AND OF SUCH JOINTS IN VIBRATION ABSORBERS
ARTICULATIONS ÉLASTIQUES COMPRENANT UNE BUTÉE DE TORSION ET UTILISATION ASSOCIÉE DANS DES AMORTISSEURS DE VIBRATIONS

(30) Priorität: 31.10.2018 EP 18000858
(43) Veröffentlichungstag der Anmeldung: 08.09.2021
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2019/000292
(87) Internationale Veröffentlichungsnummer: WO 2020/088789

(56) Entgegenhaltungen:
- WO-A1-2012/121694
- WO-A1-2016/023628
- WO-A2-2012/153197
- DE-A1- 2 062 797
- DE-B2- 2 062 797
- DE-C2- 3 745 044
- GB-A- 411 622
- GB-A- 532 393
- GB-A- 2 160 619
- US-A- 2 069 270
- US-A- 5 836 821
- US-A1- 2012 063 915

## Beschreibung

Die Erfindung betrifft neuartige Torsions-Anschlagbauteile auf Basis von mehrschichtigen Elastomer-Metall Elementen in zylindrischer, konusförmiger oder sphärischer Form, welche besonders geeignet sind, um als wartungsfreie und verschleißarme Gelenke mit großer Winkelspreizung, beispielsweise in Lenkerstangen für Schwingungstilgern, eingesetzt werden zu können. Derartige Gelenke, welche auch als Kardangelenke ausgebildet sein können, können erfindungsgemäß in unterschiedlichen Vorrichtungen zur Anwendung kommen, beispielsweise in Schwingungstilgern, insbesondere Pendeltilgern in zu dämpfenden Maschinen, wie zum Bleispiel, Windkraftanlagen.

Für Schwingungstilger mit hoher Eigenfrequenz werden besonders kurze Pendel-Gelenksstangen benötigt. Um eine notwendige ausreichende Tilger-Amplitude zu erreichen, müssen die Gelenke große Wege vollziehen. Das ist mit Kreuzgelenken aus Gleitlagern oder Wälzlagern grundsätzlich nach dem Stand der Technik möglich. Allerdings sind diese Lager verschleißanfällig und haben einen größeren Platzbedarf, was in bei Schwingungstilgern für schlanke Bauwerke, wie beispielsweise Windkraftanlagen, oft ein zusätzliches Problem ist. Ein mögliche Lösung wären wartungsfreie rein elastische Buchsenlager. Wartungsfreie Elastomer-Buchsenlager nach dem Stand der Technik sind aber in der Regel nicht in der Lage, die erforderlichen großen Auslenkwinkel von 50° und größer zu ermöglichen. Das hängt damit zusammen, dass für die großen Winkel eine sehr dicke Elastomerschicht erforderlich ist, welche damit am Innendurchmesser deutlich kleiner und damit weicher sein muss als am Außendurchmesser. Man kann dies einigermaßen dadurch kompensieren, dass man die Buchsen so gestaltet, dass sie am Innendurchmesser sehr viel länger sind als am Außendurchmesser. Das hat jedoch zur Folge, dass man solche Buchsen unverhältnismäßig lang bauen muss.

Es wäre auch grundsätzlich eine nach außen abnehmende Steifigkeit des Elastomers zu realisieren, wie dies z.B. in der DE 374504462 beschrieben ist. Das hätte jedoch neben Fertigungstechniken und Schwierigkeiten den Nachteil, dass die mechanischen Eigenschaften aufgrund des außen weicheren Elastomers geringer wären.

Das Dokument DE2062797 beschreibt ein mehrschichtiges elastisches Torsionsgelenk mit einem Torsonsanschlag an der Gelenkachse.

Es ist somit Aufgabe der vorliegenden Erfindung ein elastisches Gelenk zu entwickeln, welches die beschriebenen Nachteile nicht aufweist, und dennoch Auslenkwinkel von über 50° ermöglicht.

Der hier präsentierten Erfindung liegt die Idee zugrunde, entsprechende rein elastische mehrschichtige Gelenke so zu gestalten, dass die inneren, weichen Schichten in der Bewegung gemäß einem für die jeweilige Schichtdicke erträglichen Drehwinkel blockiert werden. Dabei wird durch die mehrschichtige Ausführung der erfindungsgemäßen elastischen Gelenke die radiale Steifigkeit des Schichtelements erhöht.

Diese Aufgabe wurde durch die angehängten Ansprüchen gelöst.

Gegenstand der Erfindung ist somit ein elastisches Torsions-Gelenk, welches befähigt ist, in mehreren zu bestimmenden Stufen Auslenkwinkel von > 25°, insbesondere > 50°, vorzugsweise > 75° bis vorzugsweise 90°, bereitzustellen, umfassend ein um eine innere feste Gelenk-Achse oder um eine innere feste Gelenk-Kugel bewegliches elastisches Schichtelement (1)(2), welches aus mehreren elastischen durch Bleche voneinander getrennte konzentrische Schichten, in der Regel zwei, drei oder vier Schichten, aufgebaut ist, dadurch gekennzeichnet, dass die Gelenk-Achse (1.14) oder die Gelenk-Kugel (2.7) fest mit der innersten elastischen Schicht des betreffenden Schichtelements verbunden ist, so dass bei relativer Bewegung des Schichtelements zur inneren festen Gelenk-Achse oder zur inneren festen Gelenk-Kugel die besagte innerste elastische Schicht von allen Schichten am stärksten verformt wird, und die Gelenk-Achse oder die Gelenk-Kugel an mindestens einer Position des Schichtelements mit einem Torsionsanschlag (1.4)(2.4.) verbunden ist, wobei der Torsionsanschlag und das Schichtelement so gestaltet sind, dass der Torsionsanschlag bei einer relativen Rotationsbewegung von Schichtelement und Gelenk-Achse zueinander oder bei einer relativen kardanischen Bewegung von Schichtelement und Gelenk-Kugel zueinander um einen definierten Auslenkwinkel (1.5)(2.20) an dem der Gelenk-Achse oder der Gelenk-Kugel am nächsten befindlichen innersten Blech des Schichtelements (1)(2) anschlägt, so dass nach Anschlag an das Blech die angrenzende innere elastische Schicht keine weitere Verformung erfährt.

In einer ersten Ausführungsform der Erfindung ist das elastische Schichtelement eine zylindrische Buchse (1) die aus Schichten konzentrischer ringförmiger Elastomerformkörper aufgebaut sind, die durch entsprechende Zwischenbleche voneinander getrennt sind. Die Buchse weist eine feste Achse oder Welle (1.14) auf, die identisch ist mit der geometrischen Längsachse des Buchsenkörpers. Die Schichten sind ringförmig um diese feste Achse angeordnet. Die feste Achse ist an einer oder an beiden flachen Seitenenden der Buchse mit einem Torsionsanschlag (1.4) versehen.

Wichtig ist, dass die zentrale Achse/Welle fest mit der innersten elastischen Schicht des buchsenförmigen Schichtelements verbunden ist. Bei torsionalen Drehbewegungen der Achse mit einem bestimmten Auslenkwinkel wird so die innerste Schicht zunächst verformt, und zwar solange, bis der Torsionsanschlag (1.4) an das innerste oder einer der inneren Bleche anstößt. Von da an, erfolgt keine weitere Verformung mehr, so dass keine Überbeanspruchung des elastischen Materials der inneren Schicht erfolgen kann.

Wird nun die Drehung durch Krafteinwirkung weitergeführt so verformen sich nunmehr die nächsten weiter außen liegenden elastische Schichten des elastischen Buchsenkörpers bis der Torsionsanschlag an das entsprechende weiter außen liegende Zwischenblech anschlägt. Dies kann nun im Prinzip beliebig weitergeführt werden, entsprechend der Anzahl der Schichten bzw. Bleche. Somit kann gezielt und stufenweise eine große Gesamtauslenkung von bis und über 90° erfolgen, ohne dass das Elastomerelement Schaden erleidet.

Damit der Torsionsanschlag (1.4) an die konzentrischen ringförmigen Zwischenbleche des Schichtelements bei einer torsionalen Bewegung des Schichtelements gegenüber der zentralen Achse überhaupt anschlagen kann, wird vorgesehen, dass der elastische Buchsenkörper an einer oder an beiden seiner flachen Seiten überstehende innere Zwischenbleche (1.2.1 und 1.2.2) aufweist, aus denen ein Winkelsegment mit Zentrum auf der gedachten geometrischen Achse des Buchsen-Schichtelements ausgespart ist, in dem sich der Torsionsanschlag um die feste Achse bewegen kann, und so in der Lage ist innerhalb dieses Bewegungsraums, an die durch die Aussparung entstandenen Seitenkanten des jeweiligen Zwischenblechs stufenweise anzuschlagen. Die geometrische Anordnung und /oder Länge der Zwischenbleche zum Anschlagelement bestimmt dabei den jeweiligen Auslenkwinkel des Gelenks.

Das Anschlagen des Torsionsanschlags (1.4) kann dabei auf mindestens zweierlei Weise geschehen.

Zum einen kann vorgesehen werden, dass die überstehenden Zwischenbleche (1.2.1 und 1.2.2) unterschiedlich lang sind, bzw. unterschiedlich lang in den Bewegungsraum für den Torsionsanschlag hineinragen, wobei sichergestellt sein muss, dass die Länge eines inneren Blechs jeweils größer ist als die Länge des äußeren Blechs ist, wodurch ein entsprechender Auslenkwinkel (1.5)(1.6) festgelegt werden kann. Genaugenommen, muss das relativ innere Blech länger in das ausgesparte Winkelsegment hineinreichen als das relative äußere Blech. In diesem Fall kann der Torsionsanschlag einfach ein Riegel ohne eigenes Profil sein und der jeweilige Auslenkwinkel wird durch die geometrische Anordnung der Bleche gegenüber dem sich drehenden Anschlagelement (1.4) bestimmt.

Zum anderen kann erfindungsgemäß vorgesehen werden, dass die überstehenden Bleche (1.2.1)(1.2.2) gleich lang sind, beziehungsweise gleich lang in das ausgesparte Winkelsegment, bzw. den dadurch entstandenen Bewegungsraum hineinreichen. In diesem Fall können die gewünschten stufenweisen Auslenkwinkel (1.5)(1.6) durch entsprechend vorgesehene Profile am Torsions-Anschlag (1.4) erreicht werden.

Die erfindungsgemäßen buchsenförmigen Schichtelemente (1) weisen vorzugsweise mindestens einen Trennschlitz bzw. ein Vorspannfenster (1.7) längs zur Achse auf, so dass es möglich ist, dass beim Betrieb des Gelenkes überschüssiges Elastomermaterial aus den Schichten in das freie Volumen des Vorspannfensters gedrückt werden kann. Überdies unterliegen Buchsen durch den Schwund des Elastomers nach der Vulkanisolation Schrumpfspannungen und müssen deshalb in der Regel komprimiert werden. Da es nicht, oder nicht einfach möglich ist die Elastomer-Schichten zwischen den Blechen zu verdichten, ist es sinnvoll mindestens ein Vorspannfenster (1.7) am Umfang anzubringen. Alternativ wäre es zum Beispiel unter größerem Aufwand möglich, mehrere Buchsen mit Innen- und Außenblechen nach der Kalibrierung (Verdichtung) ineinander zu schieben.

In einer abgewandelten zweiten Ausführungsform ist das elastische Schichtelement eine konisch geformte Buchse (1), wobei die Konusachse der Achse der oben beschriebenen zylindrischen Buchse entspricht. Ansonsten ist der Konuskörper ebenfalls aus Schichten konzentrischer konusförmiger Elastomerformkörper aufgebaut, die durch entsprechend geformte Zwischenbleche voneinander getrennt sind. Der oben für die zylindrischen Buchsen beschriebene Aufbau und die Funktionsweise im Zusammenspiel mit dem Torsionsanschlag und seiner erforderlichen Funktion ist auch für die konusförmige Buchse anzuwenden und völlig analog zur zylindrischen Buchse.

Die konusförmigen Buchsen haben den zusätzlichen Vorteil, dass sie auch noch Kräfte senkrecht zur Torsionsebene aufnehmen können und so einen Beitrag zur Dämpfung eine Pendeltilgers liefern, welcher nicht durch Torsionskräfte alleine bedingt ist.

In einer dritten Ausführungsform der Erfindung ist das elastische Schichtelement ein sphärischer Körper, der im Wesentlichen die Form einer sphärischen Halbschale (2) aufweist. Auf deren flacher Seite der Halbschale ist mittig eine innere feste Gelenk-Kugel (2.7) zusammen mit dem Torsionsanschlag (2.4) angebracht. Die Gelenk-Kugel ist auch hier direkt mit der innersten elastischen Schicht der sphärischen Schale verbunden. Die Zwischenbleche haben wie auch die elastischen Schichten sphärische Form.

Im Gegensatz zu der oben beschriebenen ersten und zweiten Ausführungsform, erfolgt der Anschlag des Torsionsanschlag (2.4) and die betreffenden Zwischenbleche nicht durch eine gegenläufige Rotationsbewegung von Schichtelement und Torsionsanschlag/Achse, sondern durch Andrücken des Anschlags an die jeweiligen Zwischenbleche aufgrund eine gezielten kardanischen Bewegung des erfindungsgemäßen Kugelgelenk.

Bei dieser Ausführungsform ist die Aussparung eines entsprechenden Winkelsegments mit überstehenden Zwischenblechen entbehrlich, ebenso wie extra überstehende Zwischenbleche. Überdies erfolgt der Kontakt mit dem Torsionsanschlage an der dem Anschlag zugewandten ringförmigen Langkannte des jeweiligen Zwischenblechs, welches aus der sphärischen Halbschale herausschaut.

In einer bevorzugten Ausführungsform dieser sphärischen Elemente können die betreffenden Kontaktflächen auf den Zwischenbelchen mit umlaufenden Anschlagelementen (2.22) verstärkt werden, wodurch die Kontaktfläche auch vergrößert werden kann.

Bei der hier dargelegten Ausführungsform ragen die ringförmigen Zwischenbleche mit dem gleichen Abstand aus der umgebenden Elastomerschichten. Die Einstellung des stufenweisen Auslenkwinkels (2.21) (2.22) erfolgt hier also erfindungsgemäß über den Torsionsanschlag (2.4), welcher eine den gewünschten Auslenkwinkeln entsprechende Profilstruktur auf der den Blechen zugewandten Seite aufweist, die so gestaltet ist, dass beim Andrücken des Anschlags zunächst weitgehend nur die innerste elastische Schicht verformt wird und zwar so lange und so weit, bis das innerste Blech des sphärischen Schichtelements von der ersten betreffenden Profilstruktur des Anschlags (2.4) getroffen wird. Bei weiterer Auslenkung der Gelenkkugel (2.7) in die gleiche Richtung wird nunmehr die zweitinnerste Elastomerschicht verformt bis nunmehr das zweitinnerste Zwischenblech von der zweiten betreffenden Profilstruktur des Anschlags getroffen wird. Von innen nach außen entsprechend der vorgenommenen Auslenkung im Gelenk wird nun stufenweise das Gelenk in den betreffenden elastischen Schichten bis zu einem vertretbaren Maße komprimiert. Das Prinzip der Auslenkung entspricht also vollständig der Funktionsweise für die zylindrischen und konusförmigen Schichtelemente (1), die weiter oben bereits genauer beschrieben wurden. Auch hier können, je nach Anzahl und Beschaffenheit der Schichten und Zwischenbleche, ein-, zwei-, drei-, vier- oder beliebig-stufige Auslenkwinkel realisiert werden, die sich am Ende zu einem großen Gesamt-Auslenkwinkel von mindesten 90° addieren, ohne dass das elastisch Gelenk Schaden nimmt oder nennenswert verschleißt.

Die beschriebenen erfindungsgemäßen Schichtelemente (1)(2) mit Stufen-Winkelfunktion weisen also mindestens zwei elastische Schichten mit einem Zwischenblech auf, so dass damit eine einstufige Auslenkung am einzigen Zwischenblech ermöglicht wird. Vorzugsweise besitzen die erfindungsgemäßen Schichtelemente (1)(2) jedoch mindestens drei elastisch Schichten mit zwei Zwischenblechen, wodurch eine zweistufige Auslenkung des erfindungsgemäßen Gelenks realisierbar ist. Selbstverständlich können noch mehr (vier, fünf sechs, usw.) Schichten mit entsprechenden Zwischenblechen vorgesehen werden.

Die elastischen Schichten der erfindungsgemäßen Torsions-Gelenke sind entweder gleich dick oder verschieden dick. Vorzugsweise sind sie unterschiedlich dick, wobei wegen der einwirkenden Kräfte die inneren elastischen Schichten dünner vorgesehen sind als die äußeren Schichten, solange die Steifigkeit des Elastomermaterials in den Schichten gleich oder ähnlich ist. Natürlich können auch Schichten mit unterschiedlicher Steifigkeit eingesetzt werden, wodurch es möglich ist, die Schichtdicken zu variieren.

Vorteilhaft ist es, wenn die Dicke der einzelnen Schichten gemäß der radialen Belastung dimensioniert werden. Bei gleicher Elastomer-Härte und Länge der Buchsen ergibt es sich, dass die inneren Schichten für gleiche erträgliche Lasten deutlich dünner sein müssen als Schichten mit größeren Durchmessern. Kleinere Durchmesser können bei gleicher Schichtdicke aufgrund des geringeren Umfangsweges der Drehbewegung größere Winkel ertragen, sodass für Torsionselemente gerne möglichst kleine Durchmesser verwendet werden.

Natürlich haben kleinere Durchmesser auch eine geringere Torsionssteifigkeit, weshalb es sinnvoll ist diese nach der beschriebenen Methode abzustützen, sodass keine zu großen Drehwinkel möglich sind, die dem Material Schaden würden.

Die beschriebenen erfindungsgemäßen Schichtelemente (1)(2) mit Stufen-Winkelfunktion sind im Gegensatz zu Gleit- oder Wälzlagern des Standes der Technik wartungsfrei und in der Regel auch kostengünstiger. Sie können im Maschinen- und Anlagenbau überall dort eingesetzt werden, wo Schwenkwinkel oder Auslenkwinkel zwischen 10° und 20° bis etwa 90° benötigt werden (bei Auslenkungen kleiner als 10° reicht in der Regel eine einzige Elastomerschicht ohne Anschlagsfunktion).

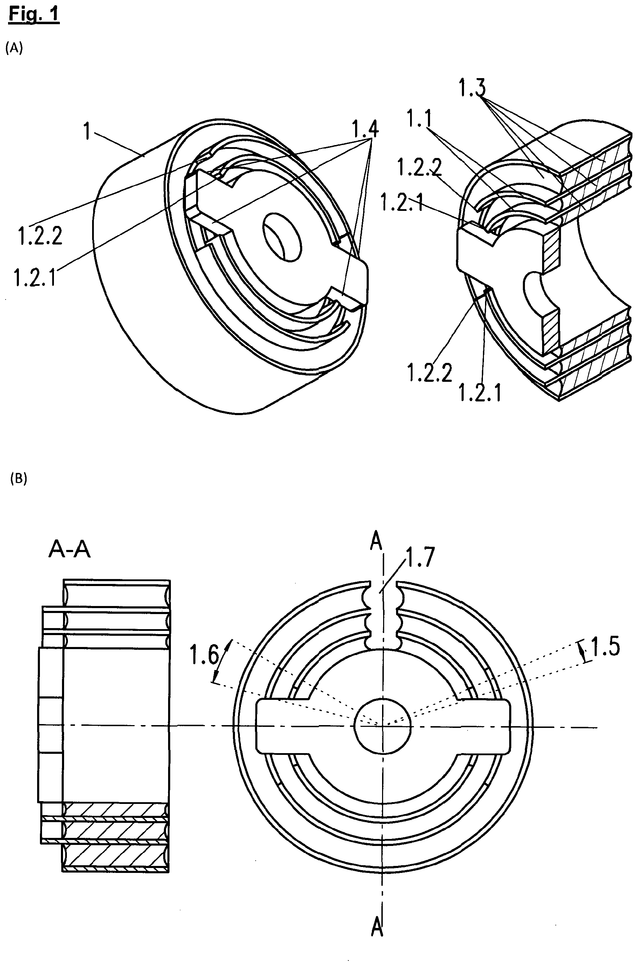

Abb. 1 beschreibt eine erfindungsgemäße Buchse mit zylindrischen Schichtelement und Anschlagfunktion. Die Buchse weist auf einer Seite überstehende Zwischenbleche auf. Aus diesen überstehenden Zwischenblechen ist ein Bewegungsraum für den Torsionsanschlag in Form eines Winkelsegments ausgespart. Die Zwischenbleche reichen unterschiedlich lang in den Bewegungsraum, wobei das innerste Blech weiter hineinreicht, also relativ länger ist, als das zweitinnerste Blech, und so weiter. Die dadurch gebildeten Auslenkwinkel für den Torsionsanschlag sind mit (1,5) (innerster und kleinster Winkel) und (1.6) (zweit innerste und größerer Winkel) angegeben. Die Buchse weist in allen Schichten eine Vorspannfenster (1.7) auf.

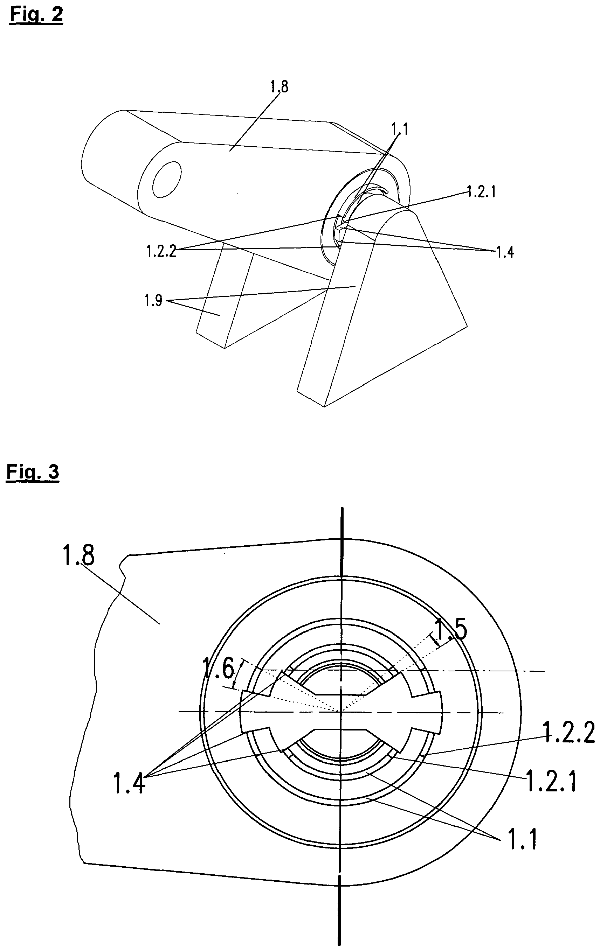

Abb. 2 zeigt einen Lenkerhebel (1.8) für große Winkelauslenkung, welcher ein entsprechendes Bauteil gemäß Abb. 1 in seinem Auge aufweist.

Abb. 3 zeigt eine entsprechendes zylindrisches Schichtelement wie Abb. 1, jedoch sind hier alle herausstehenden Zwischenbleche im Bewegungsraum des Anschlags im Wesentlichen gleich lang, bzw. ragen gleich weit in die besagte Aussparung hinein. Das Anschlagelement (1.4) weist dementsprechend unterschiedliche angeschrägte Flächen für das Anschlagen an das betreffende Zwischenblech auf, entsprechend der gewünschten Auslenkwinkel (1.5)(1.6).

Im Detail zeigt die Abbildung ein doppeltes Kardangelenk zur Aufhängung eines transversalen Tilgers.

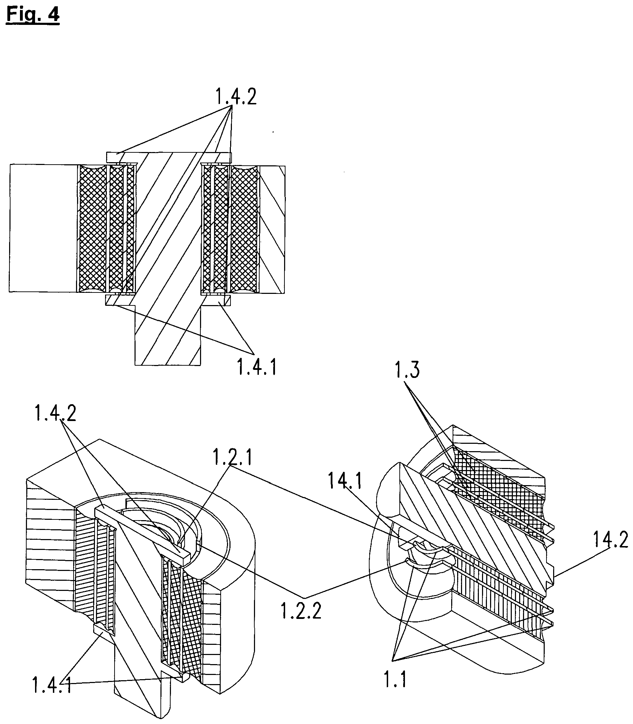

Abb. 4 stellt ein Abb. 1 entsprechendes buchsenförmiges Schichtelement (1) dar, welches jedoch auf beiden flachen Seiten der Buchse überstehende Zwischenbleche mit Aussparungen für jeweils einen Torsionsanschlag (1.4) aufweist.

Bei den Ausführungsformen der Abb. 1 - 4 ragen also die Zwischenbleche 1.1 zumindest auf einer Seite länger heraus als die Elastomerschicht 1.3, grundsätzlich kann diese Verlängerung auch an beiden Enden der Buchse erfolgen. Die Zwischenbleche 1.1.erhalten eine Aussparung 1.2.1, und 1.2.2 welche einen bestimmten Winkel freigibt. Gleichzeitig ist ein Torsionsanschlag 1.4 mit der Achse verbunden. Nach einem bestimmten Winkel 1.5 nimmt er das innere Blech an dem Anschlag 1.2.1 mit, sodass keine weitere Verformung der Innenschicht erfolgt. Bei einem noch größeren Winkel 1.6 wird das zweite Blech 1.2.2 von dem Torsionsanschlag 1.4 mitgenommen. Bild eins zeigt ein Bauteil mit drei Schichten, bei dem zwei Bleche von dem Torsionsanschlag 1.4 bewegt werden. Grundsätzlich können beliebig viele Schichten mit der jeweiligen Anschlagfunktion angeordnet werden.

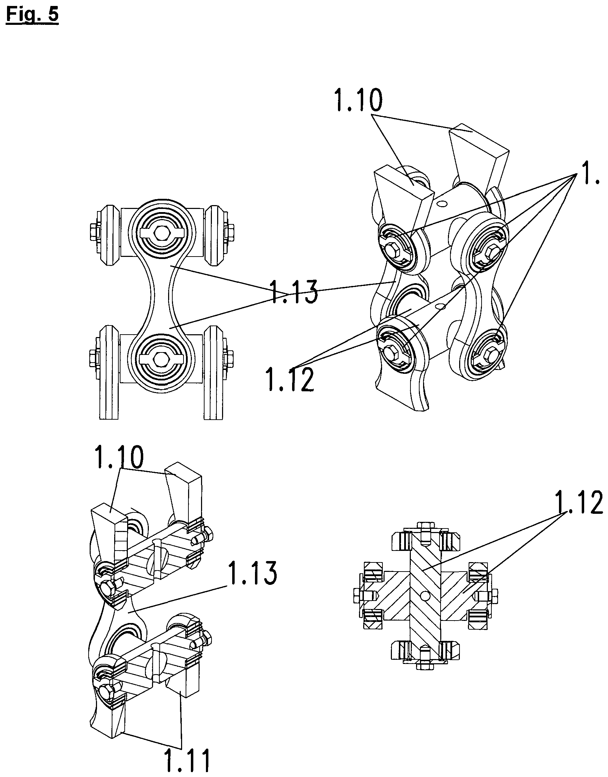

Abb. 5 zeigt verschiedene Ansichten von Elastomer-Kardangelenken und Doppelkardangelenken, welche mit den erfindungsgemäßen Buchsen der Abb. 1 - 4 ausgestattet sind, und somit für große Auslenkung hervorragend geeignet sind.

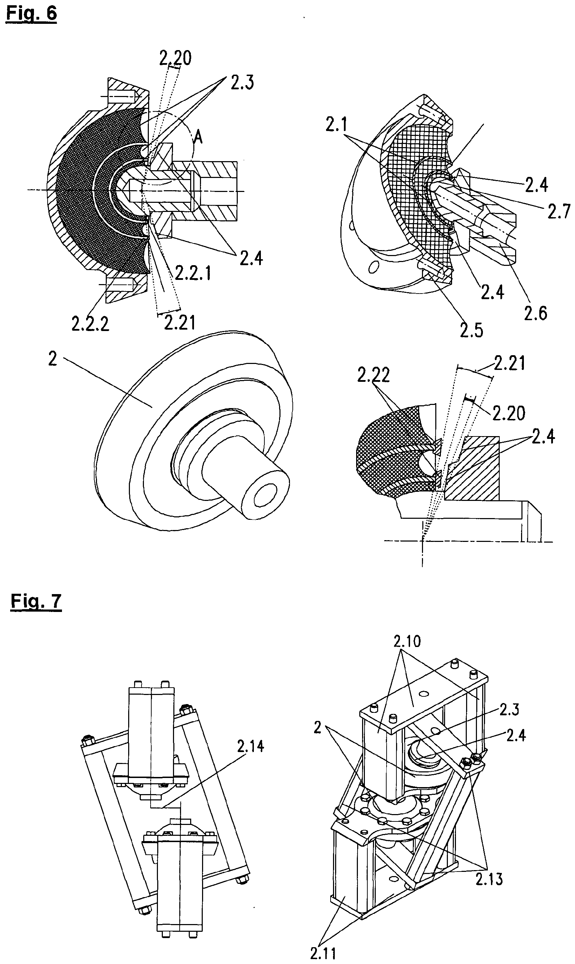

Abb. 6 zeigt die zweite prinzipielle Ausführungsform der Erfindung, nämlich ein Kugelgelenk mit einem sphärischen Gelenkkörper, welcher mittig ein Aussparung für eine feste Gelenkkugel (2.7) aufweist, die fest mit der innersten elastischen Schicht verbunden ist und bei Bewegung (Auslenkung) mitbewegt bzw. verform wird. Der mögliche Gesamtauslenkwinkel setzt sich aus den Winkeln (2.20) und (2.21) zusammen und wird im konkreten Fall durch zwei Stufen im Profil des Anschlags (2.4) bewerkstelligt. Umlaufende Anschlagelemente (2.22), welche am endständigen Teil der jeweiligen ringförmigen Zwischenbleche angebracht sind, erhöhen die Genauigkeit des Anschlagens zwischen Anschlagelement (2.4) und den Zwischenblechen des sphärischen Schichtelements.

Das erfindungsgemäße Kugelgelenk besteht aus mehreren halbkugelförmigen Elastomer-Schichten (2.3). Diese sind übereinandergestapelt und durch angebundene Halbkugelbleche (2.1) miteinander verbunden. Die Außenglocke (2.5) dreht sich um die Innenkugel (2.7).

Da der Umfang der Innenkugel deutlich kleiner ist als der der Außenglocke, würde sich das Elastomer fast nur im inneren Bereich drehen. Im äußeren Bereich wäre nur elastisches Material, welches nicht an der Verformung teilnimmt. Dies wird dadurch verhindert, dass die kugelförmigen Zwischenbleche (2.1) sich jeweils stufenweise nach einem bestimmten Winkel mit drehen und somit nur eine begrenzte torsionale Bewegung erfahren. Dabei verdreht sich der Anschlag-Ring (2.4) mit der inneren Kugel (2.7) und legt sich nach einem bestimmten Winkel an der Blechkante (2.2.1) an, und wird mit dieser weiter verdreht. Nach einem weiteren Winkel kommt dann der Anschlag (2.2.2) zum Eingriff, sodass sich letztlich nur noch die äußerste Schicht verformen kann. Das erfindungsgemäße Kugelgelenk kann überall dort eingesetzt werden, wo eine große Winkelbewegung im Raum stattfinden muss. Gegenüber der Buchse mit Kardangelenk benötigt das Kugelgelenk keine kardanische Anordnung um die räumliche Bewegung zu ermöglichen.

Abb. 7 zeigt die Anwendung zweier zusammengeschlossener sphärischen Gelenke gemäß Abb. 6 zu einem in einer Ebene wirksamen Kardangelenk.

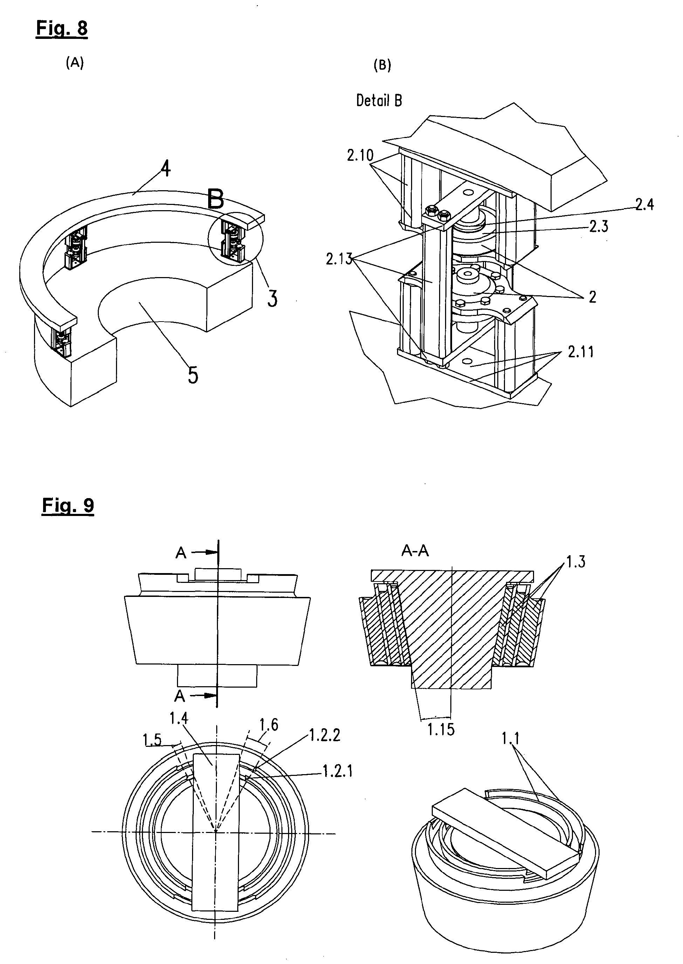

Abb. 8 zeigt den möglichen Einsatz eines erfindungsgemäßen Kardangelenks gemäß Abb. 6 und 7 mit Pendeltilger, wie dies typischerweise in einer Windkraftanlage zu Einsatz kommen kann. Die Gelenke sind in Pendelstangen (3) integriert, welche an ihrem oberen Ende mit der Tragekonstruktion der Anlage (z.B. der Turm der WKA) und mit dem anderen Ende mit der Pendelmasse (5) verbunden sind. Die Masse (5) kann somit mit großem Auslenkungswinkel transversal in der horizontalen Ebene frei schwingen.

Abb. 9 zeigt ein erfindungsgemäßes elastisches Lager mit Torsionsanschlag, welcher aus einem konusförmigen Grundkörper mit entsprechend geformten um die Konusachse alternierend angeordneten, rotationssymmetrischen, konischen Elastomerschichten (1.3) und Metallplatten (1.1) aufgebaut ist, wobei der Konuswinkel (1.15) durch die Längsachse und den hierzu geneigten Konusflächen gebildet wird. Zu sehen sind neben dem eigentlichen Anschlagelement (1.4) auch hier der innere und der äußere Anschlagwinkel (1.5) (1.6).

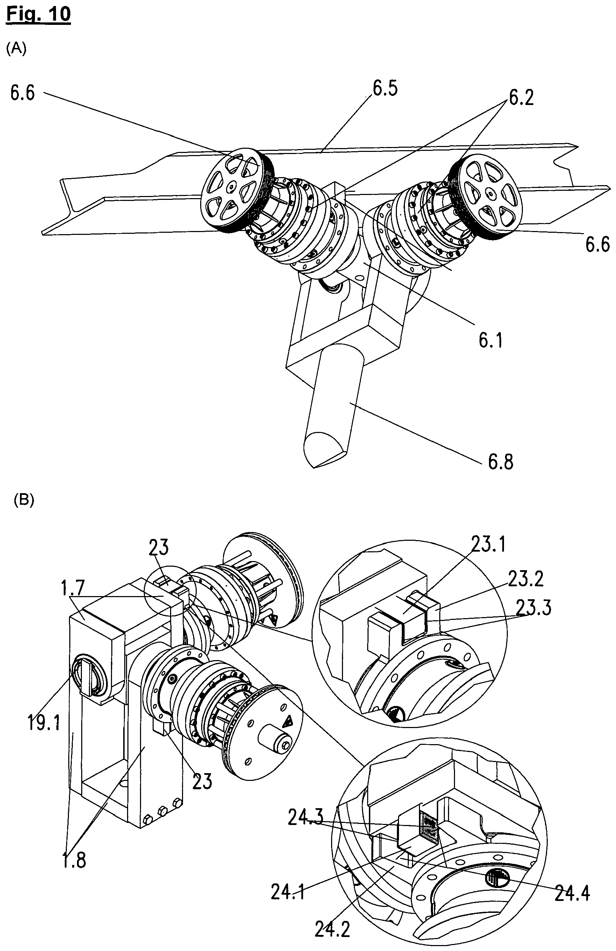

Abb. 10: (A) zeigt eine perspektivische Sicht einer Pendelaufhängung (6), welche an einer Tragekonstruktion (6.5) befestigt ist. Die Pendelaufhängung umfasst ein zwei-welliges Kardan- bzw. Kreuzgelenk (6.1) sowie ein Übersetzungsgetriebe (6.2) und ein Dämpfungselement (6.6) jeweils an einem Ende der beiden Wellen des Gelenkes. Die Pendelstange (6.8) am unteren Ende der Aufhängung (6.7) ist nur teilweise abgebildet. Die beiden Dämpfungselemente (6.6) auf den Wellen können mit hier nicht gesondert dargestellten Rotationsmassen (6.6.1) versehen sein, die aber optional sind, und ggf. wenn keine zusätzliche Frequenzeinstellung erwünscht oder notwendig ist, weggelassen werden können. Nicht abgebildet bzw. zu sehen sind die erfindungsgemäßen elastischen Lager mit elastischem Torsionsanschlag (6.4), in Form von den beschriebenen zylindrischen Elastomerbuchsen, den sphärischen Halbschalen oder den konischen Elastomerbuchsen.

Die Dämpfungseinheiten (6.6) sind vorzugsweise mit Wirbelstrom betrieben und umfassen eine vorzugsweise rotationssymmetrische Leiterscheibe sowie eine mit Permanentmagneten oder Elektromagneten versehene ebenfalls vorzugsweise rotationssymmetrische Scheibe aus beispielsweise Stahl, Keramik oder Kunststoff. Beide Scheiben sind dabei gegenüber angeordnet und durch einen Luftspalt voneinander getrennt, und bewegen sich, ausgelöst durch eine Pendelbewegung, relativ zueinander um die Welle, wodurch ein Wirbelstrom erzeugt wird, welcher eine Kraft erzeugt, die der Pendel bewegenden Kraft entgegengesetzt ist, so dass es zu einer Dämpfung bzw. Abbremsung der Pendelbewegung kommt.

Ferner kann die Wirbelstrom-Dämpfungseinheit (6.6) zusätzlich eine ggf. variable einstellbare Rotationsmasse aufweisen, wie dies in der WO 2019/029839 näher beschrieben ist. Dadurch und zusätzlich durch Verwendung von Scheiben mit unterschiedlichem Durchmesser zur Erhöhung der Umdrehungsgeschwindigkeit der Bereiche der Scheiben mit den Magneten kann Einfluss auf die Eigenfrequenz des Schwingungssystem genommen werden, bzw. das Schwingungssystem auf die schwingungstechnischen Gegebenheiten adaptiert werden.
(B) zeigt das Kardangelenk von (A) aus einer anderen Perspektive als Bestandteil der Pendelaufhängung mit Elastomerbuchsen (19)(19.1) und Drehmomentstützen (23), Innenhebel (23.1), Außenhebel (23.2), elastischen Anschlag ((23.3) und Drehmomentstützen mit Leerlaufwinkel (24), (Innenhebel 24.1), (Außenhebel 24.2), (elastischer Anschlag 24.3) und freiem Bewegungswinkel (24.4).

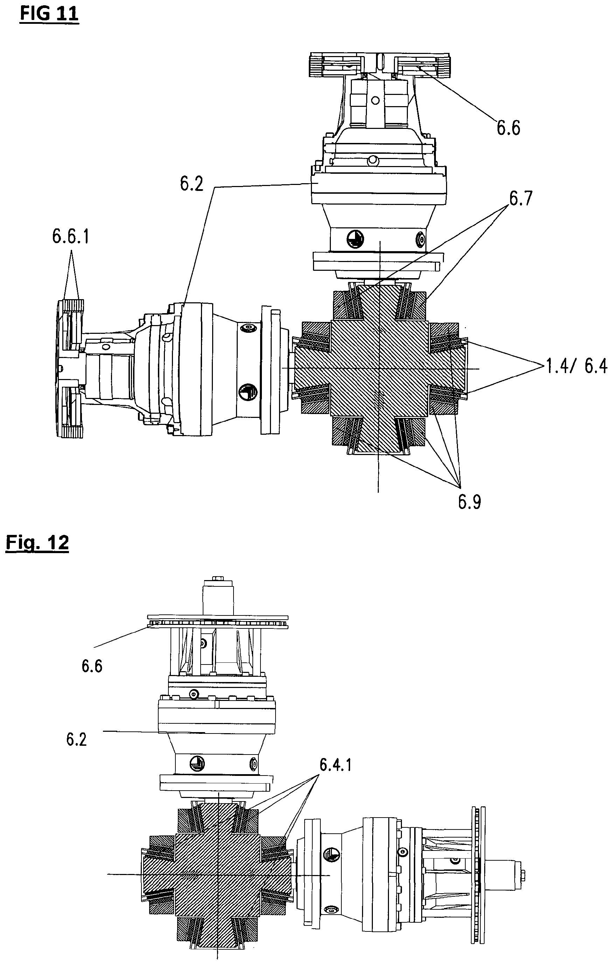

Fig. 11 zeigt die kardanische Pendelaufhängung von Abb. 10 jedoch in der Draufsicht, bei der man nunmehr die Position und Anbringung der hier beschriebenen erfindungsgemäßen elastischen Lager mit elastischen Torsionsanschlag (1.4)(6.4) an vorzugsweise beiden Enden der beiden Wellen des Kardangelenkes angedeutet sind, wobei die besagten Lager, welche in entsprechende Halterungen (6.9) eingebaut sind, nur schematisch angeben sind. Getriebeseitig werden die Wellen ebenfalls durch eine Halterung (6.7) geführt.

Fig. 12: zeigt die kardanische Pendelaufhängung der Abb. 11, welche mit erfindungsgemäßen konisch geformten Elastomerbuchsen (6.4.1) mit einem elastischen Torsionsanschlag (6.4), wie z.B. in Abb. 9 gezeigt, ausgestattet ist.

## Patentansprüche

1. Elastisches Torsions-Gelenk, welches befähigt ist, mehrstufig Auslenkwinkel von mindestens 50° Auslenkung bereitzustellen, umfassend ein elastisches Schichtelement (1)(2), welches mit einem Torsionsanschlag (1.4)(2.4) funktionell wirksam verbunden ist, wobei
(Aa) das um eine innere feste Gelenk-Achse (1.14) bewegliches elastisches Schichtelement (1), welches aus mehreren durch Zwischenbleche voneinander getrennte konzentrische elastischen Schichten in Gestalt einer zylindrischen oder konischen Buchse aufgebaut ist,
(Ab) die Gelenk-Achse fest mit der innersten elastischen Schicht des Schichtelements (1) verbunden ist, so dass bei relativer Bewegung des Schichtelements zur inneren festen Gelenk-Achse die besagte innerste elastische Schicht von allen Schichten am stärksten verformt wird,
(Ac) die Gelenk-Achse an mindestens einer Position des Schichtelements (1) mit dem Torsionsanschlag (1.4) verbunden ist,
(Ad) der Torsionsanschlag (1.4) und das Schichtelement (1) so gestaltet sind, dass der Torsionsanschlag (1.4) bei einer relativen Rotationsbewegung von Schichtelement und Gelenk-Achse zueinander um einen definierten Auslenkwinkel (1.5) an dem der Gelenk-Achse am nächsten befindlichen innersten Zwischenblech des Schichtelements (1) anschlägt, so dass nach Anschlag an das Blech die angrenzende innere elastische Schicht keine weitere Verformung erfährt,
(Ae) das zylindrische oder konische Schichtelement (1), welches besagte innere feste Gelenk-Achse (1.14) aufweist, und der Torsionsanschlag (1.4) an mindestens einer flachen Seite der Buchse oder des Konus angebracht ist, wobei der Anschlag an das jeweilige konzentrisch ringförmige oder konusförmige Zwischenblech durch relative Rotationsbewegung von Schichtelement und Gelenk-Achse zueinander erfolgt, und
(Af) das zylindrische oder konische Schichtelement (1) auf der Seite des Torsionsanschlags (1.4) überstehende innere Zwischenbleche (1.2.1 und 1.2.2) aufweist, aus denen ein Winkelsegment ausgespart ist, in dem sich der Torsionsanschlag um die Achse bewegen und an die durch die Aussparung entstandene Seitenkante des jeweiligen Blechs mit definiertem Auslenkwinkel stufenweise anschlagen kann;
oder wobei
(Ba) das um eine innere feste Gelenk-Kugel (2.7) bewegliches elastisches Schichtelement (2) aus mehreren durch Zwischenbleche voneinander getrennte elastischen Schichten aufgebaut ist,
(Bb) die innere feste Gelenk-Kugel (2.7) fest mit der innersten elastischen Schicht des Schichtelements (2) verbunden ist, so dass bei relativer Bewegung des Schichtelements zur inneren festen Gelenk-Kugel die besagte innerste elastische Schicht von allen Schichten am stärksten verformt wird,
(Bc) die innere feste Gelenk-Kugel (2.7) an mindestens einer Position des Schichtelements (2) mit dem Torsionsanschlag (2.4.) verbunden ist,
(Bd) der Torsionsanschlag (2.4) und das Schichtelement (2) so gestaltet sind, dass der Torsionsanschlag (2.4) bei einer relativen kardanischen Bewegung von Schichtelement und Gelenk-Kugel (2.7) zueinander um einen definierten Auslenkwinkel (2.20) an der Gelenk-Kugel am nächsten befindlichen innersten Zwischenblech des Schichtelements (2) anschlägt, so dass nach Anschlag an das Blech die angrenzende innere elastische Schicht keine weitere Verformung erfährt,
**dadurch gekennzeichnet, dass**
- im Falle des zylindrischen oder konischen Schichtelements (1) - das stufenweise Anschlagen des Auslenkwinkels (1.5) durch entsprechende gestaltete Profile an der dem Schichtelement zugewandten Seite des Torsionsanschlags (1.4) erreicht wird, und
- im Falle des um die innere feste Gelenk-Kugel (2.7) beweglichen elastischen Schichtelements (2) - dieses im Wesentlichen die Form einer sphärischen Halbschale aus sphärisch geformten elastischen Schichten und Zwischenblechen aufweist, auf deren flacher Seite mittig die besagte innere feste Gelenk-Kugel (2.7) mit dem Torsionsanschlag (2.4) angebracht ist, wobei der Anschlag an das jeweilige konzentrisch ringförmige oder konusförmige Zwischenblech des Schichtelements durch Andrücken des Torsionsanschlags aufgrund einer kardanischen Bewegung von Schichtelement und Gelenk-Kugel zueinander erfolgt.

2. Elastisches Torsions-Gelenk nach Anspruch 1, **dadurch gekennzeichnet, dass** der Torsionsanschlag (1.4) und das zylindrische oder konische Schichtelement (1) so gestaltet sind, dass der Torsionsanschlag bei weiterer Kraftausübung und betreffender Bewegung zwischen Schichtelement (1) und Gelenk-Achse (1.14) um einen zweiten definierten Auslenkwinkel (1.6) an eines der folgenden weiter außen liegenden Zwischenbleche anschlägt.

3. Elastisches Torsions-Gelenk nach Anspruch 2, **dadurch gekennzeichnet, dass** der Torsionsanschlag (1.4) und das zylindrische oder konische Schichtelement (1) so gestaltet sind, dass der Torsionsanschlag entsprechend weiteren Auslenkwinkeln stufenweise an weitere weiter außenliegende Bleche anschlägt.

4. Elastisches Torsions-Gelenk nach einem der Ansprüche-1 - 3, **dadurch gekennzeichnet, dass** auf jeder der beiden flachen Seiten des zylindrischen oder konischen Schichtelements (1) ein Torsionsanschlag (1.4) angebracht ist.

5. Elastisches Torsions-Gelenk nach Anspruch 1, **dadurch gekennzeichnet, dass** der Torsionsanschlag (2.4) und das sphärische Schichtelement (2) so gestaltet sind, dass der Torsionsanschlag bei weiterer Kraftausübung und betreffender Bewegung zwischen Schichtelement (2) und Gelenk-Kugel (2.7) um einen zweiten definierten Auslenkwinkel (2.21) an eines der folgenden weiter außen liegenden Zwischenbleche anschlägt.

6. Elastisches Torsions-Gelenk nach Anspruch 5, **dadurch gekennzeichnet, dass** der Torsionsanschlag (2.4) ein entsprechendes Profil aufweist, so dass die besagten Auslenkwinkel (2.20) (2.21) des Gelenkes ermöglicht werden.

7. Elastisches Torsions-Gelenk nach Anspruch 5 oder 6, **dadurch gekennzeichnet, dass** die konzentrischen Zwischenbleche, an den Stellen, auf die der Torsionsanschlag (2.4) bei Auslenkung jeweils drückt, mit umlaufenden Anschlagelementen (2.22) versehen sind.

8. Elastisches Torsions-Gelenk nach einem der Ansprüche 1 - 7, **dadurch gekennzeichnet, dass** das zylindrische oder konische Schichtelement (1) oder das sphärische Schichtelement (2) mindestens drei elastische Schichten aufweist.

9. Kardangelenk, **dadurch gekennzeichnet, dass** es ein elastisches Torsionsgelenk nach einem der Ansprüche 1 - 8 aufweist.

10. Kardangelenk nach Anspruch 9, **dadurch gekennzeichnet, dass** es zusätzlich Wirbelstrom betriebene Dämpfungselemente (6.6) aufweist.

11. Kardangelenk nach Anspruch 9 oder 10, **dadurch gekennzeichnet, dass** es ein Übersetzungsgetriebe (6.2) aufweist.

12. Schwingungstilger umfassend ein elastisches Torsions-Gelenk gemäß einem der Ansprüche 1 - 8 oder ein Kardangelenk nach einem der Ansprüche Anspruch 9 - 11.

13. Schwingungstilger nach Anspruch 12, **dadurch gekennzeichnet, dass** er ein Pendel umfasst, welches über einen Lenkerhebel (1.8) mit einem elastischen Torsions-Gelenk nach einem der Ansprüche 1 - 8 oder einem Kardangelenk nach einem der Ansprüche Anspruch 9 - 11 verbunden ist.

14. Windkraftanlage, **dadurch gekennzeichnet, dass** sie ein elastisches Torsions-Gelenk nach einem der Ansprüche 1 - 8 oder ein Kardangelenk nach einem der Ansprüche 9 - 11 oder einen Pendel-Schwingungstilger gemäß Anspruch 13 umfasst.

## Claims

1. Elastic torsion joint which is capable of providing multi-stage deflection angles of at least 50° deflection, comprising an elastic layer element (1)(2) which is connected to a torsion stop (1.4)(2.4) in a functionally effective manner, wherein
(Aa) the elastic layer element (1), which is movable about an inner fixed joint axle (1.14) and which is composed of a plurality of concentric elastic layers which are separated from one another by intermediate sheets, in the form of a cylindrical or conical bushing,
(Ab) the joint axle is fixedly connected to the innermost elastic layer of the layer element (1), so that, when the layer element is moved relative to the inner fixed joint axle, said innermost elastic layer is deformed the most of all the layers,
(Ac) the joint axle is connected to the torsion stop (1.4) at at least one position of the layer element (1),
(Ad) the torsion stop (1.4) and the layer element (1) are designed such that, in the case of a rotational movement of the layer element and the joint axle relative to one another by a defined deflection angle (1.5), the torsion stop (1.4) strikes against the innermost intermediate sheet of the layer element (1) that is closest to the joint axle, so that after the sheet has been struck, the adjacent inner elastic layer does not undergo any further deformation,
(Ae) the cylindrical or conical layer element (1), which has said inner fixed joint axle (1.14), and the torsion stop (1.4) is attached to at least one flat side of the bushing or the cone, the striking against the relevant concentrically annular or conical intermediate sheet being carried out by rotational movement of the layer element and
joint axle relative to one another, and
(Af) the cylindrical or conical layer element (1) comprises inner intermediate sheets (1.2.1 and 1.2.2) protruding on the side of the torsion stop (1.4), from which intermediate sheets an angular segment is cut out, in which cut-out the torsion stop can move around the axle and strike in stages, at a defined deflection angle, against the side edge of the relevant sheet that is produced by the cut-out;
or wherein
(Ba) the elastic layer element (2), which is movable about an inner fixed joint ball (2.7), is composed of a plurality of elastic layers separated from one another by intermediate sheets,
(Bb) the inner fixed joint ball (2.7) is fixedly connected to the innermost elastic layer of the layer element (2), so that, when the layer element is moved relative to the inner fixed joint ball, said innermost elastic layer is deformed the most of all the layers,
(Bc) the inner fixed joint ball (2.7) is connected to the torsion stop (2.4) at at least one position of the layer element (2),
(Bd) the torsion stop (2.4) and the layer element (2) are designed such that, in the case of a cardanic movement of the layer element and the joint ball (2.7) relative to one another by a defined deflection angle (2.20), the torsion stop (2.4) strikes against the innermost intermediate sheet of the layer element (2) that is closest to the joint ball, so that after the sheet has been struck, the adjacent inner elastic layer does not undergo any further deformation,
**characterized in that**
- in the case of the cylindrical or conical layer element (1), the striking of the deflection angle (1.5) is achieved by corresponding shaped profiles on the side of the torsion stop (1.4) facing the layer element, and
- in the case of the elastic layer element (2) which is movable around the inner fixed joint ball (2.7), said layer element substantially has the shape of a spherical half-shell which consists of spherically shaped elastic layers and intermediate sheets, and to the flat side of which shell said inner fixed joint ball (2.7) is centrally attached together with the torsion stop (2.4), the striking against the relevant concentrically annular or conical intermediate sheet of the layer element being carried out by the torsion stop being pressed due to a cardanic movement of the layer element and joint ball relative to one another.

2. Elastic torsion joint according to claim 1, **characterized in that** the torsion stop (1.4) and the cylindrical or conical layer element (1) are designed such that, in the case of a further application of force and relevant movement between the layer element (1) and joint axle (1.14) by a second defined deflection angle (1.6), the torsion stop strikes against one of the following intermediate sheets located further outward.

3. Elastic torsion joint according to claim 2, **characterized in that** the torsion stop (1.4) and the cylindrical or conical layer element (1) are designed such that the torsion stop strikes further sheets located further outward in stages according to further deflection angles.

4. Elastic torsion joint according to any of claims 1 to 3, **characterized in that** a torsion stop (1.4) is attached to each of the two flat sides of the cylindrical or conical layer element (1).

5. Elastic torsion joint according to claim 1, **characterized in that** the torsion stop (2.4) and the spherical layer element (2) are designed such that, in the case of a further application of force and relevant movement between the layer element (2) and joint ball (2.7) by a second defined deflection angle (2.21), the torsion stop strikes against one of the following intermediate sheets located further outward.

6. Elastic torsion joint according to claim 5, **characterized in that** the torsion stop (2.4) has a corresponding profile so as to allow said deflection angles (2.20) (2.21) of the joint.

7. Elastic torsion joint according to either claim 5 or claim 6, **characterized in that,** at each of the points against which the torsion stop (2.4) presses during deflection, the concentric intermediate sheets are provided with circumferential stop elements (2.22).

8. Elastic torsion joint according to any of claims 1 to 7, **characterized in that** the cylindrical or conical layer element (1) or the spherical layer element (2) has at least three elastic layers.

9. Cardan joint, **characterized in that** it comprises an elastic torsion joint according to any of claims 1 to 8.

10. Cardan joint according to claim 9, **characterized in that** it additionally comprises eddy-current-operated damping elements (6.6).

11. Cardan joint according to either claim 9 or claim 10, **characterized in that** it comprises a transmission (6.2).

12. Vibration absorber comprising an elastic torsion joint according to any of claims 1 to 8 or a Cardan joint according to any of claims claim 9 to 11.

13. Vibration absorber according to claim 12, **characterized in that** it comprises a pendulum which is connected via a control link lever (1.8) to an elastic torsion joint according to any of claims 1 to 8 or to a Cardan joint according to any of claims claim 9 to 11.

14. Wind turbine, **characterized in that** it comprises an elastic torsion joint according to any of claims 1 to 8 or a Cardan joint according to any of claims 9 to 11 or a pendulum vibration absorber according to claim 13.

## Revendications

1. Articulation de torsion élastique, capable de fournir un angle de déviation en plusieurs paliers d'une déviation d'au moins 50°, comprenant un élément multicouche (1)(2) élastique relié de manière à agir fonctionnellement à une butée de torsion (1.4)(2.4), dans laquelle
(Aa) l'élément multicouche (1) élastique mobile autour d'un axe d'articulation (1.14) fixe interne, lequel élément multicouche est réalisé sous la forme d'une douille cylindrique ou conique à partir de plusieurs couches élastiques concentriques séparées les unes des autres par des tôles intercalaires,
(Ab) l'axe d'articulation est relié de manière fixe à la couche élastique la plus interne de l'élément multicouche (1), de sorte que, lors d'un mouvement relatif de l'élément multicouche par rapport à l'axe d'articulation fixe interne, ladite couche élastique la plus interne est la plus déformée de toutes les couches,
(Ac) l'axe d'articulation est relié à la butée de torsion (1.4) à au moins une position de l'élément multicouche (1),
(Ad) la butée de torsion (1.4) et l'élément multicouche (1) sont conçus de sorte que, lors d'un mouvement de rotation relatif de l'élément multicouche et de l'axe d'articulation l'un par rapport à l'autre, la butée de torsion (1.4) vient en butée, selon un angle de déviation (1.5) défini, contre la tôle intercalaire de l'élément multicouche (1) qui est la plus interne et la plus proche de l'axe d'articulation, de sorte que la couche élastique interne adjacente ne subit aucune autre déformation après la venue en butée contre la tôle,
(Ae) l'élément multicouche (1) cylindrique ou conique présente ledit axe d'articulation (1.14) fixe interne, et la butée de torsion (1.4) est montée sur au moins un côté plat de la douille ou du cône, dans laquelle la venue en butée contre la tôle intercalaire respective annulaire ou conique de manière concentrique est effectuée par un mouvement de rotation relatif de l'élément multicouche et de l'axe d'articulation l'un par rapport à l'autre, et
(Af) l'élément multicouche (1) cylindrique ou conique présente, sur le côté de la butée de torsion (1.4), des tôles intercalaires (1.2.1 et 1.2.2) internes faisant saillie et desquelles un segment angulaire est évidé, dans lequel segment angulaire la butée de torsion peut se déplacer autour de l'axe et venir en butée par paliers, selon un angle de déviation défini, contre le bord latéral de la tôle respective formé par l'évidement ;
ou dans laquelle
(Ba) l'élément multicouche (2) élastique mobile autour d'une bille d'articulation (2.7) fixe interne est réalisé à partir de plusieurs couches élastiques séparées les unes des autres par des tôles intercalaires,
(Bb) la bille d'articulation (2.7) fixe interne est reliée de manière fixe à la couche élastique la plus interne de l'élément multicouche (2), de sorte que, lors d'un mouvement relatif de l'élément multicouche par rapport à la bille d'articulation fixe interne, ladite couche élastique la plus interne est la plus déformée de toutes les couches,
(Bc) la bille d'articulation (2.7) fixe interne est reliée à la butée de torsion (2.4) à au moins une position de l'élément multicouche (2),
(Bd) la butée de torsion (2.4) et l'élément multicouche (2) sont conçus de sorte que, lors d'un mouvement à cardan relatif de l'élément multicouche et de la bille d'articulation (2.7) l'un par rapport à l'autre, la butée de torsion (2.4) vient en butée, selon un angle de déviation (2.20) défini, contre la tôle intercalaire de l'élément multicouche (2) qui est la plus interne et la plus proche de la bille d'articulation, de sorte que la couche élastique interne adjacente ne subit aucune autre déformation après la venue en butée contre la tôle,
**caractérisée en ce que**
- en ce qui concerne l'élément multicouche (1) cylindrique ou conique - la venue en butée par paliers de l'angle de déviation (1.5) est atteinte au moyen de profils façonnés correspondants sur le côté de la butée de torsion (1.4) qui fait face à l'élément multicouche, et
- en ce qui concerne l'élément multicouche (2) élastique mobile autour de la bille d'articulation (2.7) fixe interne - ledit élément multicouche présente sensiblement la forme d'une demi-coque sphérique constituée de couches élastiques et de tôles intercalaires de forme sphérique, sur le côté plat desquelles ladite bille d'articulation (2.7) fixe interne est montée de façon centrée avec la butée de torsion (2.4), dans laquelle la venue en butée contre la tôle intercalaire respective annulaire ou conique de manière concentrique de l'élément multicouche est effectuée par pression de la butée de torsion en raison d'un mouvement à cardan de l'élément multicouche et de la bille d'articulation l'un par rapport à l'autre.

2. Articulation de torsion élastique selon la revendication 1,
**caractérisée en ce que** la butée de torsion (1.4) et l'élément multicouche (1) cylindrique ou conique sont conçus de sorte que la butée de torsion vient en butée, selon un second angle de déviation (1.6) défini, contre l'une des tôles intercalaires suivantes situées plus à l'extérieur lorsqu'une force supplémentaire est exercée et qu'un mouvement correspondant entre l'élément multicouche (1) et l'axe d'articulation (1.14) est effectué.

3. Articulation de torsion élastique selon la revendication 2,
**caractérisée en ce que** la butée de torsion (1.4) et l'élément multicouche (1) cylindrique ou conique sont conçus de sorte que la butée de torsion vient en butée par paliers, en fonction d'autres angles de déviation, contre d'autres tôles situées plus à l'extérieur.

4. Articulation de torsion élastique selon l'une des revendications 1 à 3,
**caractérisée en ce qu'**une butée de torsion (1.4) est montée sur chacun des deux côtés plats de l'élément multicouche (1) cylindrique ou conique.

5. Articulation de torsion élastique selon la revendication 1,
**caractérisée en ce que** la butée de torsion (2.4) et l'élément multicouche (2) sphérique sont conçus de sorte que la butée de torsion vient en butée, selon un second angle de déviation (2.21) défini, contre l'une des tôles intercalaires suivantes situées plus à l'extérieur lorsqu'une force supplémentaire est exercée et qu'un mouvement correspondant entre l'élément multicouche (2) et la bille d'articulation (2.7) est effectué.

6. Articulation de torsion élastique selon la revendication 5,
**caractérisée en ce que** la butée de torsion (2.4) présente un profil correspondant, de sorte que lesdits angles de déviation (2.20) (2.21) de l'articulation sont rendus possibles.

7. Articulation de torsion élastique selon la revendication 5 ou 6,
**caractérisée en ce que** les tôles intercalaires concentriques sont pourvues d'éléments de butée (2.22) périphériques aux endroits où la butée de torsion (2.4) exerce à chaque fois une pression en cas de déviation.

8. Articulation de torsion élastique selon l'une des revendications 1 à 7,
**caractérisée en ce que** l'élément multicouche (1) cylindrique ou conique ou l'élément multicouche (2) sphérique présente au moins trois couches élastiques.

9. Articulation à cardan, **caractérisée en ce qu'**elle présente une articulation de torsion élastique selon l'une des revendications 1 à 8.

10. Articulation à cardan selon la revendication 9, **caractérisée en ce qu'**elle présente en outre des éléments d'amortissement (6.6) fonctionnant par courant de Foucault.

11. Articulation à cardan selon la revendication 9 ou 10,
**caractérisée en ce qu'**elle présente un mécanisme de transmission (6.2).

12. Amortisseur d'oscillations comprenant une articulation de torsion élastique selon l'une des revendications 1 à 8 ou une articulation à cardan selon l'une des revendications revendication 9 à 11.

13. Amortisseur d'oscillations selon la revendication 12,
**caractérisé en ce qu'**il comprend un pendule qui est relié, par l'intermédiaire d'un levier articulé (1.8), à une articulation de torsion élastique selon l'une des revendications 1 à 8 ou à une articulation à cardan selon l'une des revendications revendication 9 à 11.

14. Éolienne, **caractérisée en ce qu'**elle comprend une articulation de torsion élastique selon l'une des revendications 1 à 8 ou une articulation à cardan selon l'une des revendications 9 à 11 ou un amortisseur d'oscillations à pendule selon la revendication 13.
